# EUROPÄISCHE PATENTSCHRIFT

(11) **EP 3 677 106 B1**
(45) Veröffentlichungstag und Bekanntmachung des Hinweises auf die Patenterteilung: **13.10.2021**
(21) Anmeldenummer: 19214954.0
(22) Anmeldetag: 10.12.2019
(51) Int. Cl.: A01B 33/02

(54) **SCHNEIDVORRICHTUNG ZUM ZERKLEINERN VON ERNTERÜCKSTÄNDEN ODER PFLANZENTEILEN**
CUTTING DEVICE FOR CRUSHING REMNANTS OF HARVESTED MATERIAL OR PLANT PARTS
DISPOSITIF DE COUPE PERMETTANT DE BROYER DES RÉSIDUS DE CULTURE OU DES PARTIES DE PLANTES

(30) Priorität: 21.12.2018 DE 102018133505
(43) Veröffentlichungstag der Anmeldung: 08.07.2020
(73) Patentinhaber: Hendlmeier, Konrad, 93107 Untersanding (DE)
(72) Erfinder: Hendlmeier, Konrad, 93107 Untersanding (DE)
(74) Vertreter: Glück Kritzenberger Patentanwälte PartGmbB

(56) Entgegenhaltungen:
- EP-A1- 2 923 539
- WO-A1-2012/093958
- WO-A1-2014/014402
- WO-A1-2014/079449
- CN-A- 108 513 745
- DE-U1-202015 101 330
- US-A1- 2009 065 222

## Beschreibung

### Technisches Gebiet

Die Erfindung bezieht sich auf eine Schneidvorrichtung zum Zerkleinern von Ernterückständen oder Zwischenfruchtbeständen auf landwirtschaftlichen Nutzflächen.

### Stand der Technik

Schneid- bzw. Messerwalzen zum Zerkleinern von Pflanzenteilen sind hinlänglich aus dem Stand der Technik bekannt. Insbesondere werden derartige rotierende Schneid- bzw. Messerwalzen bei Bodenbearbeitungsvorrichtungen eingesetzt und sind zum Zerkleinern von Ernterückständen, von bestehenden Begrünungen landwirtschaftlicher Nutzflächen oder von anderen Pflanzen oder Pflanzenteilen ausgebildet.

Aus der DE 20 2014 104 667 U1 ist beispielsweise eine Schneidvorrichtung in Form einer solchen rotierenden Schneidwalze bekannt. Die darin beschriebene Schneidwalze weist einen Walzenkörper auf, auf dessen Walzenkörperoberfläche die Schneidelemente angeordnet sind, und zwar schräg zur Arbeitsrichtung der Schneidvorrichtung bzw. zur Drehachse der Schneidwalze. Nachteilig kann es bei einer derartigen Schneidvorrichtung aufgrund der Anordnung der Schneidelemente auf der Walzenkörperoberfläche und des geringen Abstandes zwischen der Schneide der Schneidelemente und der Walzenkörperoberfläche zu einem Zusetzen der Schneidwalze mit Pflanzen- oder Erntegut kommen. Auch können sich Klumpen zwischen den schräg zueinander verlaufenden Schneidelementen festsetzen und damit die Schneidwirkung beeinträchtigen.

Ferner sind aus dem Stand der Technik rotierende Schneid- oder Messerwalzen bekannt, bei denen eine Vielzahl von Schneid- oder Messerelementen im Wesentlichen parallel zur Drehachse an der Oberfläche eines Walzenkörpers bzw. an der äußeren Mantelfläche eines Hohlwellenkörpers befestigt sind. Eine solche Messerwalze offenbart beispielsweise die WO 2014/079449 A1.

Auch die DE 20 2015 101 330 U1 stellt eine Bodenbearbeitungsvorrichtung mit einer drehbar gelagerten Schneidwalze bereit, bei der die Schneidwalze mit einer Vielzahl von Schneidmesserelementen ausgestattet ist, deren Schneidabschnitte parallel zur Drehachse der Schneidwalze verlaufen.

Die EP 2 923 539 A1 beschreibt eine bekannte Schneidvorrichtung in Form einer Schneidwalze zum Zerstören einer Vegetationsdeckschicht. Mit den oberhalb beschriebenen Bodenbearbeitungsvorrichtungen ist es jedoch schwierig, die Pflanzenteile sehr kurz, das heißt auf kurze Längen zu schneiden und gleichzeitig ein störendes Zusetzen der Schneidmesserelemente zu verhindern.

In der Agrarwirtschaft wird aber zunehmend gerade ein Schneiden der Pflanzenteile auf kurze Längen gefordert. Beispielsweise werden zur Ökologisierung in der Landwirtschaft spezielle ökologische Flächennutzungsprogramme gefördert, welche unter dem Schlagwort "Greening" bekannt sind. Unter anderem sollen im Rahmen dieses "Greenings" Zwischenfruchtbestände, Begrünungen, Winterkulturen und Winterzwischenfrüchte erst direkt vor der Neuansaat der landwirtschaftlichen Nutzfläche im Frühjahr zerkleinert und in den Boden eingearbeitet werden. Da im Rahmen der Ökologisierung der Landwirtschaft auch die Devise ausgegeben wird, den Einsatz von Pflügen möglichst gering zu halten und eine pfluglose Bearbeitung zu fördern, müssen die Pflanzen oder Pflanzenteile so zerkleinert werden, dass eine schnelle Zersetzung auch an bzw. nahe der Bodenoberfläche erfolgen kann, selbst wenn das zerkleinerte Pflanzengut nicht tief in die Erde untergehoben wird. Eine insbesondere zuverlässige Schneidwirkung von Schneidvorrichtungen der Bodenbearbeitungsgeräte erlangt dabei zunehmende Wichtigkeit und zwar bezogen auf unterschiedlichste Zwischenfrüchte und Begrünungen.

Auch hinsichtlich von Ernterückständen, insbesondere von Stoppeln oder Maisstängeln ist eine möglichst feine Zerkleinerung von enormer Bedeutung, da die Umsetzung des zerkleinerten Materials durch z. B. Regenwürmer, Bodentiere und Mikrooganismen umso erfolgreicher und schneller ist, je feiner die Ernterückstände zerkleinert werden. Die mikrobiologischen Aktivitäten und die Rotte können dadurch deutlich beschleunigt werden. Wissenschaftliche Studien belegen, dass beispielsweise Bodenwürmer und Mikroorganismen zur Umsetzung des organischen Materials am Boden liegende kurze Teile brauchen. Durch diese schnelle Zersetzung können wiederum Infektionskreisläufe von Schädlingen unterbrochen werden. Beispielsweise kann darüber der Verbreitung und Vermehrung des Maiszünslers entgegengewirkt werden.

Von der Fachwelt wird daher mittlerweile gefordert, dass sämtliche organischen Pflanzenteile, insbesondere auch Ernterückstände wie Stoppeln oder Maisstängel auf eine Länge von maximal 15 bis 17 cm zerteilt bzw. geschnitten werden sollen, um die Zersetzung bzw. die Rotte zu begünstigen und einer übermäßigen Vermehrung von Pflanzenschädlingen, wie zum Beispiel des mittlerweile sehr verbreiteten Maiszünslers, entgegenzuwirken.

Bei den aus dem Stand der Technik bekannten Lösungen ist es schwierig, die Pflanzenteile fein zu zerkleinern und gleichzeitig ein störendes Zusetzen der Schneidmesserelemente zu verhindern, so dass eine entsprechend gewünschte Schneidleistung und Schneidqualität nur mit hohem Energieaufwand erreicht werden kann. Daher besteht trotz der aus dem Stand der Technik bekannten Lösungen ein Bedarf an verbesserten Schneidvorrichtungen zum Zerkleinern von Ernterückständen oder Zwischenfruchtbeständen auf landwirtschaftlichen Nutzflächen.

### Darstellung der Erfindung

Aufgabe der vorliegenden Erfindung ist es daher eine verbesserte Schneidvorrichtung zur Verfügung zu stellen, die die Nachteile des Standes der Technik überwindet und die unter Vermeidung von störendem Zusetzen eine kurze Schnittlänge bzw. feine Zerkleinerung zuverlässig ermöglicht. Diese Aufgabe wird erfindungsgemäß durch die Vorrichtung gemäß unabhängigem Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Die Erfindung stellt eine Schneidvorrichtung zum Zerkleinern von Ernterückständen oder Zwischenfruchtbeständen auf landwirtschaftlichen Nutzflächen zur Verfügung, wobei die Schneidvorrichtung um eine Mittellängsachse rotierbar ausgebildet ist und dazu wenigstens eine Lagereinheit zur rotierbaren Lagerung aufweist. Die Schneidvorrichtung umfasst zumindest ein erstes und zweites, jeweils längliches Schneidmesserelement sowie wenigstens ein Haltemittel zum Haltern der Schneidmesserelemente. Die länglichen Schneidmesserelemente weisen jeweils einen Schneidkantenabschnitt und einen dem Schneidkantenabschnitt gegenüberliegenden Verbindungsabschnitt auf und sind radial orientiert, so dass die Schneidkantenabschnitte radial beabstandet zur Mittellängsachse angeordnet sind. Die Erfindung zeichnet sich insbesondere dadurch aus, dass die Schneidmesserelemente mit Hilfe des Haltemittels direkt miteinander verbunden sind, wobei die Verbindungsabschnitte der Schneidmesserelemente in einem die Mittellängsachse aufnehmenden Zentrumsbereich der Schneidvorrichtung unmittelbar aneinander anschließend angeordnet sind.

Die rotierende Schneidvorrichtung wird vorliegend auch als Schneidwalzenanordnung oder Messerwalzenanordnung verstanden und kann im Sinne der Erfindung auch als Messer- oder Schneideanordnung bzw. als Messer- oder Schneidwerkzeug verstanden werden. Insbesondere ist die als Schneidwalzenanordnung ausgebildete Schneidvorrichtung im vorliegenden Verständnis als ein Bodenbearbeitungswerkzeug bzw. als eine Bodenbearbeitungseinrichtung oder Bodenbearbeitungsvorrichtung zu verstehen. Dabei ist die vorliegende Schneidvorrichtung insbesondere dazu ausgebildet, einen auf einer landwirtschaftlichen Fläche stehenden Pflanzenbestand, nämlich eine bestehende Begrünung oder aber Ernterückstände, wie zum Beispiel Stoppeln zu zerkleinern, und zwar im Bereich der Bodenoberfläche, nämlich bevorzugt auch ins Erdreich unmittelbar unter der Bodenoberfläche hineinreichend. Die Schneidvorrichtung ist daher insbesondere als bodenbearbeitende Vorrichtung für die Verwendung in einem Bodenbearbeitunsgerät vorgesehen, d.h. dieses Schneiden und Zerkleinern erfolgt in Form einer Bodenbearbeitung, insbesondere auch durch zumindest oberflächliches Eindringen oder "Einschneiden" der Schneidmesserelemente in den Boden bzw. ins Erdreich. Die Schneidmesserelemente gelangen dabei mit einer freien Endkante der Schneidkantenabschnitte in Eingriff mit der Bodenoberfläche.

Die Schneidvorrichtung dient zum Querschneiden der Pflanzen oder Pflanzenteile, das heißt, die Schnittrichtung verläuft quer oder im Wesentlichen senkrecht zu einer Arbeitsrichtung der Schneidvorrichtung bzw. parallel zu deren Mittellängsachse, wobei die Schneidmesserelemente im Anwendungsfall zum Schneiden der Pflanzenteile vorzugsweise in den Boden bzw. in das Erdreich eindringen. Die Schneidmesserelemente der Schneidvorrichtung sind als längliche, im Wesentlichen eine rechteckige Form aufweisende Flachmaterialstücke ausgebildet, deren Schneidkantenabschnitt sich längs erstreckt. Durch die radiale Orientierung der Schneidmesserelemente verlaufen die Schneidkantenabschnitte im Wesentlichen parallel zur Mittellängsachse, so dass beispielsweise der Schneidkantenabschnitt eines jeden Schneidmesserelementes bei Rotation der Schneidvorrichtung pro Umdrehung einen 360° Winkel beschreibt.

Erfindungsgemäß sind die Schneidmesserelemente an ihren jeweiligen Verbindungsabschnitten direkt miteinander verbunden und schließen im Bereich der Mittellängsachse, nämlich in dem Zentrumsbereich der Schneidvorrichtung unmittelbar aneinander an. Die vorliegende erfindungsgemäße Schneidvorrichtung verzichtet dabei auf einen Wellen- oder Walzenkörper und ist somit auch als wellenlose Schneidvorrichtung oder als walzenkörperlose Schneidvorrichtung zu verstehen. Ein als Hohlwelle oder Walzenzylinder ausgebildeter Wellen- oder Walzenkörper entfällt bei der erfindungsgemäßen Schneidvorrichtung. Gemäß dem vorliegenden Verständnis stellt die erfindungsgemäße Schneidvorrichtung daher auch eine rotierende Messeranordnung dar.

Besonders vorteilhaft ist es damit möglich, Erntereste wie Stoppeln oder insbesondere Maisstängel auf sehr kurze Längen, insbesondere auf Längen von weniger als 170 mm oder weniger als 150 mm zu schneiden, wobei gleichzeitig das Zusetzen der Schneidvorrichtung mit Pflanzenmaterial oder Erdreich effektiv verhindert wird. Bedingt durch die vorteilhafte Anordnung der Schneidmesserelemente, die direkt miteinander verbunden sind, kann die Anzahl der Schneidmesserelemente reduziert und daher ein Winkelabstand benachbarter Schneidmesserelemente so gewählt werden, dass der Zwischenraum zwischen den Schneidmesserelementen groß genug ist, dass ein Zusetzen verhindert wird.

Durch die direkte Verbindung der Schneidmesserelemente wird ein Gesamtdurchmesser der Schneidvorrichtung gering gehalten, so dass auch bei kleiner Anzahl von Schneidmesserelementen die gewünschte kurze Schnittlänge erzielt werden kann. Beispielsweise bestimmt sich der Gesamtdurchmesser der Schneidvorrichtung lediglich durch etwa den doppelten Radialabstand des Schneidkantenabschnittes von der Mittellängsachse.

Verglichen dazu weisen die aus dem Stand der Technik bekannten Schneidvorrichtungen einen Gesamtdurchmesser auf, der sich addiert aus dem doppelten Radialabstand des Schneidkantenabschnittes von der Oberfläche des Walzenkörpers und dem Durchmesser des Walzenkörpers. Bei derartig vergrößerten Durchmessern der bekannten Schneidwalzen aus dem Stand der Technik ist eine Vielzahl an umfangsseitig auf der Walzenkörperoberfläche angeordneten Schneidmesserelementen nötig, um überhaupt kurze Schnittlängen erreichen zu können. Diese Schneidmesserelemente der bekannten Schneidwalzen sind daher in kleineren Winkelabständen zueinander angeordnet, so dass die Gefahr des Zusetzens mit Pflanzenmaterial und Erdreich dort erhöht ist.

Vorteilhaft ist dieses Problem bei der erfindungsgemäßen Schneidvorrichtung gelöst. Die bei der erfindungsgemäßen Schneidvorrichtung mögliche geringe Anzahl an Schneidmessern erlaubt ferner eine schnelle Arbeitsweise und hohe Schneidleistung bei vergleichsweise verringertem Energieaufwand.

Die Schneidmesserelemente sind vorzugsweise so angeordnet und ausgerichtet, dass die Schneidkantenabschnitte derart orientiert sind, dass eine die Mittellängsachse der Schneidvorrichtung beschreibende Gerade und eine eine Kantenlinie bzw. die freie Endkante der Schneidkantenabschnitte beschreibende Gerade im Wesentlichen parallel zueinander verlaufen. Ebenso bevorzugt können die Schneidkantenabschnitte so orientiert sein, dass die beiden genannten Geraden, nämlich diejenige entlang der Mittellängsachse und diejenige entlang der freien Endkante windschief zueinander verlaufen. In der letztgenannten bevorzugten Ausführungsform kann im Anwendungszustand der Schneidvorrichtung während der Bodenbearbeitung, nämlich in einem um die Mittellängsachse rotierenden Betrieb der Schneidvorrichtung insbesondere sichergestellt werden, dass die freie Endkante eines jeweiligen Schneidmesserelementes nur abschnittsweise in Eingriff mit der Bodenoberfläche steht, d.h. bei einer bestimmten, definierten Rotationsposition steht jeweils nicht die gesamte freie Endkante, gesehen über die gesamte Längserstreckung, mit der Bodenoberfläche in Eingriff.

Gemäß einer bevorzugten Ausführungsform sind ein oder zwei oder drei oder vier weitere Schneidmesserelemente vorgesehen, wobei alle Schneidmesserelemente direkt miteinander verbunden sind, derart, dass die jeweiligen Verbindungsabschnitte der Schneidmesserelemente im Zentrumsbereich unmittelbar aneinander anschließen. Bei diesen bevorzugten Ausführungsformen sind somit drei oder vier oder fünf oder sechs Schneidmesserelemente radial um die Mittellängsachse herum angeordnet. Dabei beträgt der Winkelabstand zwischen benachbarten Schneidmesserelementen immer mindestens rund 60° oder mehr.

Besonders bevorzugt sind die Schneidmesserelemente um die Mittellängsachse herum regelmäßig verteilt angeordnet, so dass die Winkelabstände zwischen benachbarten Schneidmesserelementen jeweils gleich groß sind. Vorzugsweise schließen die jeweiligen Verbindungsabschnitte der Schneidmesserelemente dabei in einem vorgegebenen Winkel aneinander an.

Gemäß einer bevorzugten Ausführungsform der Erfindung liegt eine sich in radialer Richtung erstreckende Breite der Schneidmesserelemente in einem Bereich von 50 mm bis 150 mm, bevorzugt in einem Bereich von 60 mm bis 140 mm, besonders bevorzugt in einem Bereich von 70 mm bis 130 mm, ganz besonders bevorzugt in einem Bereich von 75 mm bis 125 mm, insbesondere bevorzugt in einem Bereich von 85 mm bis 115, noch mehr bevorzugt in einem Bereich von 90 mm bis 110 mm und beispielsweise bei rund 100 mm.

Insbesondere bevorzugt weisen sämtliche Schneidmesserelemente der Schneidvorrichtung dieselbe Breite auf. Die Breite der Schneidmesserelemente stellt näherungsweise den Radialabstand des Schneidkantenabschnittes von der Mittellängsachse dar und definiert dabei näherungsweise einen Radius eines um die Mittellängsachse gedachten Kreises, wobei die doppelte Breite der Schneidmesserelemente im Wesentlichen einem Durchmesser der Schneidvorrichtung entspricht. Insbesondere ist der Durchmesser der Schneidvorrichtung auch als Rotationsdurchmesser zu verstehen.

Der Durchmesser bzw. Rotationsdurchmesser der Schneidvorrichtung bestimmt sich durch den Durchmesser eines Kreises, der bei Rotation der Schneidvorrichtung um die Mittellängsachse von freiendseitigen freien Endkanten der Schneidkantenabschnitte der Schneidmesserelemente beschrieben wird. Der Durchmesser der Schneidvorrichtung liegt somit in einem Bereich von etwa 100 mm bis 300 mm, bevorzugt in einem Bereich von 120 mm bis 280 mm, besonders bevorzugt in einem Bereich von 140 mm bis 260 mm, ganz besonders bevorzugt in einem Bereich von 150 mm bis 250 mm, insbesondere bevorzugt in einem Bereich von 170 mm bis 230, noch mehr bevorzugt in einem Bereich von 180 mm bis 220 mm und beispielsweise bei rund 200.

Gemäß einer bevorzugten Ausführungsform der Erfindung ist die Breite der Schneidmesserelemente so gewählt und auf die Anzahl der um die Mittellängsachse herum angeordneten Schneidmesserelemente abgestimmt, dass freie Endkanten der Schneidkantenabschnitte bei Rotation um die Mittellängsachse eine Kreislinie beschreiben und die freien Endkanten zweier benachbarter Schneidmesserelemente derart zueinander beabstandet sind, dass ein Kreisbogen auf dieser Kreislinie zwischen den freien Endkanten der benachbarten Schneidmesserelemente eine Bogenlänge von höchstens 270 mm, bevorzugt von höchstens 200, besonders bevorzugt von höchstens 170 mm und insbesondere bevorzugt von höchstens 150 mm aufweist.

Bevorzugt sind im Falle einer geradzahligen Anzahl von Schneidmesserelementen jeweils zwei Schneidmesserelemente in Bezug auf die Mittellängsachse gegenüberliegend angeordnet und bilden ein gegenüberliegendes Paar von Schneidmesserelementen. Die Verbindungsabschnitte der jeweiligen Paare schließen dabei fluchtend aneinander an und jedes Paar schließt einen jeweiligen Winkel von rund 180° ein.

Ganz besonders bevorzugt kann dabei ein Paar an gegenüberliegenden Schneidmesserelementen in Form eines einstückigen Doppelmesserelementes mit zwei freiendseitigen Schneidkantenabschnitten ausgebildet sein, wobei der Verbindungsabschnitt als mittig zwischen den freiendseitigen Schneidkantenabschnitten angeordneter durchgehender Verbindungsabschnitt vorgesehen ist.

Vorteilhaft ist das Haltemittel in Form einer Messerhalterung durch zumindest zwei Profilelemente gebildet, wobei jedes Profilelement mit zwei benachbart angeordneten Schneidmesserelementen in halternder Wirkverbindung steht. Die Profilelemente sind dabei insbesondere bevorzugt als Winkelprofile ausgebildet, wobei einem ersten Profilschenkel ein Schneidmesserelement zugeordnet ist und wobei der erste Profilschenkel an einer ersten Fläche des zugeordneten Schneidmesserelementes anliegt bzw. angreift und mit diesem verbunden ist. Ein zweiter Profilschenkel liegt sodann an einer ersten Fläche eines benachbarten Schneidmesserelementes an und ist mit diesem verbunden. Auf den jeweilig gegenüberliegenden Flächen der Schneidmesserelemente liegen weitere Profilelemente mit je einem Profilschenkel an und sind ebenfalls mit den Schneidmesserelementen verbunden. Jedes Schneidmesserelement ist somit abschnittsweise sandwichartig zwischen zwei Profilelementen ausgenommen und von diesen gehalten.

Je nach Anzahl der um die Mittellängsachse herum angeordneten Schneidmesserelemente können die Profilschenkel der Winkelprofile zum Beispiel einen Winkel von rund 180° oder rund 120° oder rund 90° oder ca. 72° oder rund 60° einschließen.

Gemäß einer alternativen bevorzugten Ausführungsform ist der Verbindungsabschnitt der Schneidmesserelemente in Form eines gewinkelten Flansches ausgebildet und bildet auf diese Weise das Haltemittel. Die Schneidmesserelemente können dabei derart miteinander verbunden werden, dass jeder Flansch eines Schneidmesserelementes in einem Überlappungsbereich an einem weiteren Schneidmesserelement anliegt und im Überlappungsbereich eine Verschraubung erfolgt. Je nach Anzahl der um die Mittellängsachse herum verteilten Schneidmesserelemente kann der Anstellwinkel des abgewinkelten Flansches variieren. Bei vier Schneidmesserelementen beträgt der Anstellwinkel beispielsweise rund 90°, bei drei Schneidmesserelementen rund 120° und bei sechs Schneidmesserelementen rund 60°.

Vorteile ergeben sich ferner dadurch, dass die Schneidmesserelemente lösbar und auswechselbar verbunden sind, wodurch beispielsweise ein verschleißbedingter Austausch der Schneidelemente erleichtert ist. Die lösbare Verbindung kann beispielsweise als Verschraubungen realisiert sein.

Die Lagereinheit ist bevorzugt durch zumindest zwei Lagerelemente zum tragenden Haltern der verbundenen Schneidmesserelemente gebildet, wobei die Lagerelemente zur tragenden, abschnittsweisen Aufnahme der verbundenen Schneidmesserelemente ausgebildet sind und wobei die verbundenen Schneidmesserelemente zumindest teilweise in den Lagerelementen tragend aufgenommen sind. Insbesondere bevorzugt sind die Lagerelemente koaxial zur Mittellängsachse orientiert und bilden gegenüberliegende Seiten der sich über eine Arbeitsbreite erstreckenden Schneidvorrichtung. Beispielsweise sind die Lagerelemente in Form entsprechend geeigneter Achsstummel oder Lagerstummel bzw. als entsprechend geeignete Lageranordnungen ausgebildet. Die Achsstummel können näherungsweise zapfenartig oder zylinderartig ausgebildet sein und einen Eingriffsabschnitt für den Eingriff der verbundenen Schneidmesserelemente sowie einen Achsabschnitt aufweisen. Vorzugsweise verfügt der Eingriffsabschnitt über entsprechend geformte Ausnehmungen zur teilweisen Aufnahme der verbundenen Schneidmesserelemente, beispielsweis im Wesentlichen schlitzartige Ausnehmungen. Der Eingriffsabschnitt kann insbesondere dazu ausgebildet sein, dass ein als Messerhalterung ausgebildetes Haltemittel zusammen mit den Schneidmesserelementen abschnittsweise tragend aufgenommen werden kann.

Bevorzugt können die Eingriffsabschnitte der Lagerelemente mittels der angepassten, ausgeformten Ausnehmungen auf die die Messerhalterung bildenden, zusammengefügten Profilelemente aufgesteckt bzw. aufgeschoben werden. Zusätzlich können die Lagerelemente fest mit den Profilelementen verbunden werden, beispielsweise durch Verschweißen, Verschrauben. Ebenfalls denkbar ist eine Sicherung durch Splinte.

Die Lagerelemente sind bevorzugt dazu ausgebildet und eingerichtet, dass die Schneidvorrichtung so in einem Trägerrahmen eines Bodenbearbeitungsgerätes gelagert werden kann, dass die Mittellängsachse der Schneidvorrichtung im Wesentlichen senkrecht oder aber in einem spitzen Winkel zu einer Arbeitsrichtung des Bodenbearbeitungsgerätes verläuft.

Mit einer oberhalb beschriebenen, bevorzugten Ausgestaltung der Lagereinheit kann die Schneidvorrichtung beispielsweise in einem Trägerrahmen, vorzugsweise in einem Trägerrahmen eines Bodenbearbeitungsgerätes gelagert bzw. aufgehängt werden. Damit ist es möglich, durch die entsprechende Lagerung bzw. Aufhängung in dem Trägerrahmen des Bodenbearbeitungsgerätes die Schneidvorrichtung so auszurichten, dass die Mittellängsachse quer zur Arbeitsrichtung orientiert ist und im Wesentlichen senkrecht zur Arbeitsrichtung verläuft. Ebenso ist es jedoch durch entsprechende Lagerung bzw. Aufhängung möglich und gemäß alternativer Ausführungsformen bevorzugt, die Schneidvorrichtung so auszurichten, dass die Mittellängsachse im spitzen Winkel zur Arbeitsrichtung verläuft, beispielsweise in einem Winkel zwischen 90° und 50°, bevorzugt in einem Winkel von 80° bis 60° und besonders bevorzugt in einem Winkel von etwa 70° verläuft.

Besonders vorteilhaft kann die Schneidvorrichtung durch entsprechende Lagerung bzw. Aufhängung in dem Trägerrahmen in so genannter Schubfahrt, nämlich in Arbeitsrichtung vor der Zugmaschine oder alternativ in so genannter Zugfahrt, nämlich in Arbeitsrichtung nach der Zugmaschine betrieben werden. Auf diese Weise kann die Schneidvorrichtung anwendungsbezogen und gewünschten Anforderungen entsprechend betrieben werden. Beispielsweise können dabei die Betriebsweise, die Arbeitsgeschwindigkeit und der Energieaufwand für den Betrieb in gewünschter Weise angepasst werden.

Die Schneidvorrichtung kann aus mehreren Schneideinheiten zusammengesetzt sein, wobei die Schneideinheiten in Richtung der Mittellängsachse aneinander anschließen und koaxial zueinander orientiert und mittels einer Anschlusseinheit miteinander verbunden sind. Die Schneidvorrichtung ist gemäß diesen bevorzugten Ausführungsformen quasi modulartig aufgebaut, wobei sich zumindest eine erste Schneideinheit über eine erste Teilarbeitsbreite und eine zweite Schneideinheit über eine zweite Teilarbeitsbreite erstrecken. Die Schneideinheiten decken gemeinsam die gesamte Arbeitsbreite der Schneidvorrichtung ab. Die Schneideinheiten sind vorzugsweise baugleich ausgeführt, wobei jede Schneideinheit im Wesentlichen eine eigenständige Schneidvorrichtung gemäß der oberhalb angegebenen Beschreibung bildet. Dabei ist es denkbar, dass die Lagereinheiten auch die Funktion der Anschlusseinheiten übernehmen und umgekehrt.

Besondere Vorteile ergeben sich bei Ausführungsformen mit mehreren Schneideinheiten, wenn die Schneideinheiten relativ zueinander derart ausgerichtet sind, dass die Schneidmesserelemente direkt aufeinanderfolgender Schneideinheiten in Bezug auf den Umfang um die Mittellängsachse zueinander versetzt sind, da dadurch die Rotation, insbesondere der Umlauf der Schneidvorrichtung gleichmäßiger, gleichförmiger und ruhiger erfolgt. Bei hohen Arbeitsbreiten und insbesondere in Fällen, in denen nur sehr wenige Schneidmesserelemente vorgesehen sind, können sich bei Rotation der Schneidvorrichtung Unwuchten ergeben. Durch den Versatz der Schneideinheiten bzw. durch die versetzte Anordnung der Schneidmesserelemente in Umfangsrichtung können diese Unwuchten effektiv verhindert werden.

Ganz besonders bevorzugt können mehrere Schneidvorrichtungen durch entsprechende Lagerung und Aufhängung in einen Trägerrahmen eines Bodenbearbeitungsgerätes eingesetzt werden, wie oberhalb beschrieben. Es versteht sich von selbst, dass beispielsweise ein Tandembetrieb mit zwei in Arbeitsrichtung des Bodenbearbeitungsgerätes hintereinander geschalteten und im Wesentlichen parallel zueinander angeordneten Schneidvorrichtungen möglich ist. Auch können drei oder vier oder mehrere Schneidvorrichtungen in Arbeitsrichtung des Bodenbearbeitungsgerätes hintereinander geschaltet sein. Die mehreren Schneidvorrichtungen können dabei so ausgerichtet sein, dass die jeweiligen Mittellängsachsen im Wesentlichen senkrecht zur Arbeitsrichtung oder aber im spitzen Winkel zur Arbeitsrichtung verlaufen. Insbesondere bevorzugt können bei der Verwendung mehrerer, in einem Trägerrahmen in Arbeitsrichtung hintereinander geschalteter Schneidvorrichtungen Rotationsdurchmesser der Schneidvorrichtungen variieren, wobei Schneidvorrichtungen mit unterschiedlichen Durchmessern bzw. Rotationsdurchmessern kombiniert werden.

Vorteilhaft ist die Schneidvorrichtung in einem Bodenbearbeitungsgerät einsetzbar und mit weiteren Bodenbearbeitungswerkzeugen kombinierbar. Beispielsweise kann die Schneidvorrichtung einem Grubber vorgeschaltet sein.

Gegenstand der Erfindung ist auch ein Bodenbearbeitungsgerät mit mindestens einer Schneidvorrichtung wie oberhalb beschrieben, die in einem Trägerrahmen des Bodenbearbeitungsgerätes rotierbar gelagert ist.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: in perspektivischer Ansicht eine bevorzugte Ausführungsform der Schneidvorrichtung gemäß der vorliegenden Erfindung;
- Fig. 2: ausschnittsweise in perspektivischer Ansicht einen seitlichen Endbereich der Ausführungsform der Figur 1;
- Fig. 3: in einer schematischen Schnittdarstellung einen Querschnitt der Ausführungsform der Figuren 1 und 2 entlang der Schnittlinie A-A,
- Fig. 4a-4c: in schematischer Schnittdarstellung Querschnitte weiterer Ausführungsformen der Schneidvorrichtung und
- Fig. 5: ausschnittsweise in perspektivischer Ansicht eine alternative Ausführungsform der Schneidvorrichtung gemäß der vorliegenden Erfindung.

### Wege zur Ausführung der Erfindung

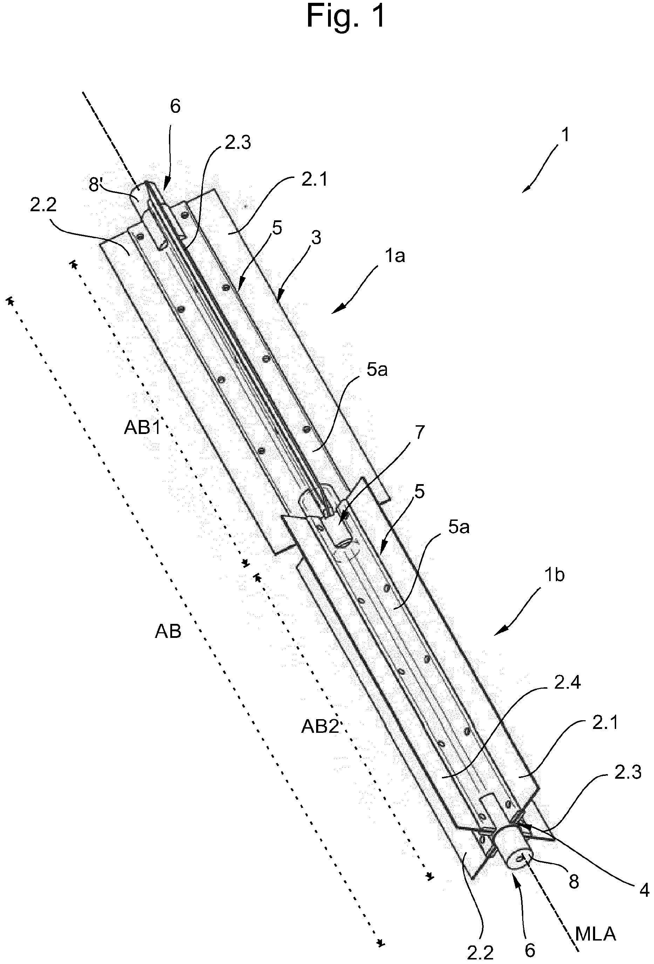

Figur 1 zeigt schematisch dargestellt eine perspektivische Ansicht einer bevorzugten Ausführungsvariante der erfindungsgemäßen Schneidvorrichtung 1. Die beispielhaft dargestellte Schneidvorrichtung 1 ist aus zwei baugleichen Schneideinheiten 1a, 1b zusammengesetzt, welche entlang einer Mittellängsachse MLA hintereinander angeordnet und mittels einer Anschlusseinheit 7 miteinander verbunden sind, wobei sich die erste Schneideinheit 1a über eine erste Teilarbeitsbreite AB1 und die zweite Schneideinheit 1b über eine zweite Teilarbeitsbreite AB2 erstreckt. Die Schneidvorrichtung 1 deckt damit eine gesamte Arbeitsbreite AB ab, wobei die Arbeitsbreite AB im Wesentlichen senkrecht zu einer Arbeitsrichtung verläuft, welche auch als Vorschubrichtung der im Arbeitseinsatz befindlichen Schneidvorrichtung 1 gesehen werden kann.

Es versteht sich von selbst, dass die vorliegende Schneidvorrichtung 1 ebenso gut aus nur einer Schneideinheit aufgebaut sein kann, und jede der dargestellten baugleichen Schneideinheiten 1a, 1b für sich genommen eine eigenständige Schneidvorrichtung 1 bilden kann.

Die insbesondere zum Zerkleinern von Ernterückständen oder Zwischenfruchtbeständen auf landwirtschaftlichen Nutzflächen ausgelegte Schneidvorrichtung 1 ist um die Mittellängsachse MLA rotierbar ausgebildet und kann auch als Schneidwalzenanordnung oder Messerwalzenanordnung verstanden werden. Die Mittellängsachse MLA stellt dabei zugleich eine Drehachse der Schneidvorrichtung 1 dar um welche die Schneidvorrichtung 1 im Betrieb rotiert.

Die Schneidvorrichtung 1 kann als entsprechendes Schneidwerkzeug in einer Bodenbearbeitungsvorrichtung bzw. in einem Bodenbearbeitungsgerät eingesetzt werden. Beispielsweise kann die Schneidvorrichtung 1 einzeln im "Soloeinsatz" oder aber auch in Kombination mit einem weiteren Bodenbearbeitungswerkzeug, zum Beispiel mit einem Grubber oder mit einer Scheibenegge oder dergleichen betrieben werden und kann dazu insbesondere zusammen mit dem oder den weiteren Bodenbearbeitungswerkzeug(en) in einem Trägerrahmen gelagert werden. Insbesondere eignet sich die Schneidvorrichtung 1 zum Betrieb in einer so genannten Schubfahrt, nämlich in Arbeitsrichtung vor der Zugmaschine oder alternativ in einer so genannten Zugfahrt, nämlich in Arbeitsrichtung nach der Zugmaschine betrieben werden.

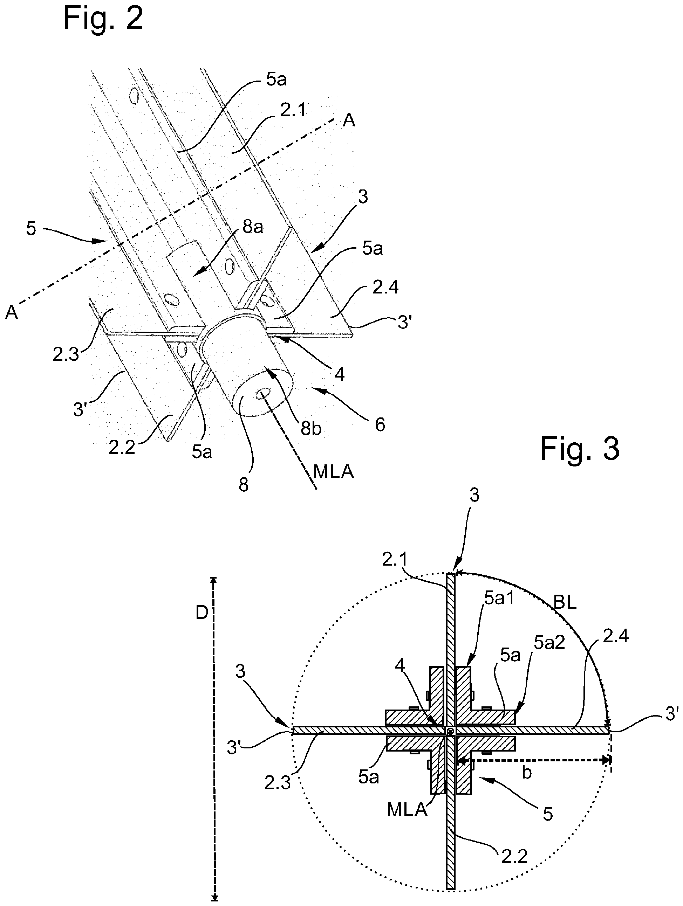

Für eine entsprechende Lagerung oder Aufhängung in einem Trägerrahmen, beispielsweise in einem Trägerrahmen eines Bodenbearbeitungsgerätes weist die Schneidvorrichtung 1 wenigstens eine Lagereinheit 6 zur rotierbaren Lagerung auf. Die Lagereinheit 6 des dargestellten Beispiels umfasst dabei zwei Lagerelemente 8, 8', welche koaxial zur Mittellängsachse MLA orientiert sind und bezogen auf die Arbeitsbreite AB an gegenüberliegenden Außenseiten der Schneidvorrichtung 1 angeordnet sind. Auf die Ausgestaltung der Lagerelemente 8, 8' soll nachfolgend im Zusammenhang mit Figur 2 noch mehr im Detail eingegangen werden.

Die Schneidvorrichtung 1 - im dargestellten Beispiel jede der baugleichen Schneideinheiten 1a, 1b - umfasst ein erstes und zweites, jeweils längliches Schneidmesserelement 2.1, 2.2 sowie zwei weitere, längliche Schneidmesserelemente 2.3, 2.4 und wenigstens ein in Form einer Messerhalterung ausgebildetes Haltemittel 5 zum Haltern der Schneidmesserelemente 2.1 - 2.4. Jedes Schneidmesserelement 2.1 - 2.4 ist im Wesentlichen als rechteckförmiges Flachmaterialstück ausgebildet und weist jeweils an einer Längsseite einen Schneidkantenabschnitt 3 und an der gegenüberliegenden Längsseite einen dem Schneidkantenabschnitt 3 gegenüberliegenden Verbindungsabschnitt 4 auf.

Die länglichen, flächig geformten Schneidmesserelemente 2.1 - 2.4 sind radial orientiert, und zwar bezogen auf die Mittellängsachse MLA oder ausgehend von der Mittellängsachse MLA, und die Schneidkantenabschnitte 3 sind radial beabstandet zur Mittellängsachse MLA angeordnet. Die Schneidmesserelemente 2.1, 2.2 sind mit Hilfe der Messerhalterung 5 direkt miteinander verbunden, wobei die Verbindungsabschnitte 4 der Schneidmesserelemente 2.1 - 2.4 in einem die Mittellängsachse MLA aufnehmenden Zentrumsbereich der Schneidvorrichtung 1 unmittelbar aneinander anschließend angeordnet sind. Die Schneidvorrichtung 1 ist daher als wellenlose Messerwalzenanordnung, und zwar als Messerwalzenanordnung ohne zylindrischen Walzenkörper zu verstehen.

Die Schneidmesserelemente 2.1 - 2.4 des dargestellten Beispiels sind im Wesentlichen kreuzweise angeordnet, wobei sich das erste und zweite Schneidmesserelement 2.1, 2.2 relativ zur Mittellängsachse MLA gegenüberliegen und ein gegenüberliegendes Paar bilden, und wobei sich die weiteren Schneidmesserelemente 2.3, 2.4 ebenfalls relativ zur Mittellängsachse MLA gegenüberliegen und ein weiteres gegenüberliegendes Paar bilden, wie insbesondere auch aus Figur 3 deutlich hervorgeht, welche in einer schematischen Schnittdarstellung einen Querschnitt entlang der Schnittlinie A-A (siehe Figur 2) durch die Ausführungsform der Figur 1 zeigt.

Um eine ruhigere, gleichmäßigere Rotation im Betrieb der Schneidvorrichtung 1 zu erreichen und Unwuchten zu vermeiden sind bei der bevorzugten Ausführungsform der Figur 1 die Schneideinheiten 1a, 1b relativ zueinander derart ausgerichtet, dass die Schneidmesserelemente 2.1 - 2.4 der aufeinanderfolgenden Schneideinheiten 1a, 1b in Bezug auf den Umfang um die Mittellängsachse MLA zueinander versetzt sind. Die Schneidmesserelemente 2.1 - 2.4 der zweiten Schneideinheit 1b stehen umfangsbezogen quasi auf Lücke zu den Schneidmesserelementen 2.1 - 2.4 der ersten Schneideinheit 1b und umgekehrt.

Im Detail wird nun mit Bezug auf Figur 3 die Anordnung und Verbindung der Schneidmesserelemente 2.1 - 2.4 erläutert. Die Schneidmesserelemente 2.1 - 2.4 sind um die Mittellängsachse MLA herum regelmäßig verteilt angeordnet, so dass jeweils benachbarte Schneidmesserelemente 2.1 - 2.4 einen Winkelabstand von 90° zueinander aufweisen. In anderen Worten ausgedrückt, schließen jeweils benachbarte Schneidmesserelemente 2.1 - 2.4 einen Winkel von rund 90° ein.

Die jeweiligen Verbindungsabschnitte 4 der Schneidmesserelemente 2.1 - 2.4 sind mit Hilfe der Messerhalterung 5 im Zentrumsbereich direkt miteinander verbunden und schließen in einem rechten Winkel unmittelbar aneinander an. Die Messerhalterung 5 des dargestellten Beispiels umfasst vier Profilelemente 5a, welche in Form von Winkelprofilen, insbesondere L-Profilen ausgebildet sind. Die vier Schneidmesserelemente 2.1 - 2.4 des dargestellten Beispiels werden somit von vier Profilelementen 5a gehalten und durch diese direkt miteinander verbunden.

Jedes Profilelement 5a weist einen ersten und zweiten Profilschenkel 5a1, 5a2 auf, welche im Beispiel der Figur 3 einen rechten Winkel einschließen. Jedes Profilelement 5a steht dabei mit jeweils zwei benachbart angeordneten Schneidmesserelementen 2.1 - 2.4 in Wirkverbindung, wobei die Profilschenkel 5a1, 5a2 jeweils im Bereich des Verbindungsabschnittes 4 an einer Fläche der Schneidmesserelemente 2.1 - 2.4 anliegen und mit diesen verbunden sind. Zur tragenden Halterung der Schneidmesserelemente 2.1 - 2.4 greifen an jedem Schneidmesserelement 2.1 - 2.4 zwei Profilelemente 5a an, und zwar an gegenüberliegenden Flächen der Schneidmesserelemente 2.1 - 2.4. Jedes Schneidmesserelement 2.1 - 2.4 ist somit sandwichartig zwischen zwei Profilelementen 5a, insbesondere zwischen Profilschenkeln der zwei Profilelemente 5a angeordnet und auf diese Weise mit den Profilelementen 5a verbunden.

Die Verbindungsabschnitte 4 der Schneidmesserelemente 2.1 - 2.4 sind somit direkt miteinander verbunden und schließen jeweils im rechten Winkel unmittelbar aneinander an. Eine Breite b der Schneidmesserelemente 2.1 - 2.4 definiert dabei näherungsweise einen Radius eines um die Mittellängsachse gedachten Kreises, den die freiendseitigen freien Endkanten 3' der Schneidkantenabschnitte 3 der Schneidmesserelemente 2.1 - 2.4 bei Rotation der Schneidvorrichtung 1 um die Mittellängsachse MLA beschreiben. Somit entspricht die doppelte Breite b der Schneidmesserelemente 2.1 - 2.4 im Wesentlichen einem Durchmesser D der Schneidvorrichtung 1.

Die Breite der Schneidmesserelemente 2.1 - 2.4 ist dabei so gewählt, dass die freien Endkanten 3' der Schneidkantenabschnitte 3 zweier benachbarter Schneidmesserelemente 2.1 - 2.4 derart zueinander beabstandet sind, dass ein Kreisbogen zwischen den freien Endkanten der benachbarten Schneidmesserelemente eine Bogenlänge BL von höchstens 170 mm aufweist. Diese Bogenlänge BL gibt im Arbeitseinsatz der Schneidvorrichtung 1 die Schnittlänge vor, mit der die Pflanzenteile oder Erntereste, insbesondere die Stoppel oder Stängel zerkleinert werden. Die Bogenlänge eines Kreisbogens berechnet sich nach anzuwendender Formel über das Produkt aus Radius und Mittelpunktswinkel (angegeben im Bogenmaß). Die Breite b der Schneidmesserelemente 2.1 ― 2.4 kann somit je nach der Anzahl der um die Mittellängsachse MLA herum angeordneten Schneidmesserelemente 2.1 ― 2.4 optimal gewählt werden, und zwar derart, dass die Bogenlänge BL zwischen den Schneidkantenabschnitten 3 - und damit die Schnittlänge der Schneidvorrichtung 1 - nicht größer als 170 mm, vorzugsweise nicht größer als 150 mm ist. Bei vier, jeweils im rechten Winkel zueinander benachbarten Schneidmesserelementen 2.1 ― 2.4 beträgt die Breite b beispielsweise rund 90 mm bis 100 mm.

Besonders vorteilhaft können mit der vorliegenden Schneidvorrichtung 1 insbesondere eine geringe Anzahl an Schneidmesserelementen 2.1 ― 2.4 verwendet und damit große Winkelabstände zwischen den Schneidmesserelementen 2.1 ― 2.4 eingehalten werden, um dennoch kurze Schnittlängen von weniger als 170 mm, vorzugsweise weniger als 150 mm für die zu zerkleinernden Pflanzenteile oder Erntereste zu erreichen. Dadurch kann auch bei der gewünschten bzw. erforderlichen kurzen Schnittlänge einem Zusetzen der Schneidvorrichtung 1 mit Pflanzenresten und Erdreich effektiv entgegengewirkt und dieses auf ein Minimum reduziert werden. Dadurch wird die Schneidleistung und insbesondere die Schneidqualität der Schneidvorrichtung 1 deutlich verbessert.

Die großen Winkelabstände zwischen den Schneidmesserelementen 2.1 ― 2.4, welche auch als weite Öffnungswinkel zwischen den Schneidmesserelementen 2.1 ― 2.4 verstanden werden können, sind aufgrund des geringeren Durchmessers D der Schneidvorrichtung 1 möglich, welcher lediglich bei etwa der doppelten Breite b der Schneidmesserelemente 2.1 ― 2.4 liegt. Verglichen mit herkömmlichen Messerwalzen ist der Durchmesser der vorliegenden Schneidvorrichtung 1 deutlich kleiner, da sich bei den bekannten Messerwalzen aus dem Stand der Technik der Durchmesser aufaddiert aus dem Durchmesser des Walzenkörpers bzw. der Hohlwelle und der doppelten Breite von daran befestigten Messern oder Schneidmesserelementen. Vorteilhaft können mit der vorliegenden Schneidvorrichtung 1 Winkelabstände bzw. Öffnungswinkel von deutlich mehr als 60° oder 90° eingehalten und trotzdem kurze Schnittlängen erzielt werden.

Mit Bezug auf Figur 2 wird nun mehr im Detail die Ausgestaltung der aus zwei Lagerelementen 8, 8' gebildeten Lagereinheit 6 beschrieben. Jedes Lagerelement 8, 8' der zum tragenden Haltern der verbundenen Schneidmesserelementen 2.1 bis 2.4 dienenden Lagereinheit 6 ist koaxial zur Mittellängsachse MLA orientiert und ist zur tragenden, abschnittsweisen Aufnahme der verbundenen Schneidmesserelementen 2.1 bis 2.4 ausgebildet, insbesondere zur tragenden, abschnittsweisen Aufnahme der mit den Schneidmesserelementen 2.1 bis 2.4 verbundenen und diese haltenden Messerhalterung 5. Die Lagerelemente 8, 8' sind vorzugsweise in Form entsprechend geeigneter Achsstummel oder Lagerstummel ausgebildet.

Im dargestellten Beispiel der Figur 2, bei dem die Messerhalterung 5 vier Profilelemente 5a, insbesondere vier Winkelprofile umfasst, sind die mit den Schneidmesserelementen 2.1 bis 2.4 verbundenen Profilelemente 5a teilweise in den Lagerelementen 8, 8' tragend aufgenommen. Die Lagerelemente 8, 8' weisen dazu einen Eingriffsabschnitt 8a für den Eingriff der Messerhalterung sowie einen Achsabschnitt 8b zur rotierbaren Lagerung in einem Trägerrahmen auf. Der Eingriffsabschnitt 8a weist entsprechend geformte Ausnehmungen auf, in welche die Profilschenkel 5a1, 5a2 der Profilelemente 5a zusammen mit den sandwichartig dazwischen angeordneten Schneidmesserelementen 2.1 ― 2.4 teilweise aufgenommen sind. Die Eingriffsabschnitte 8a der Lagerelemente 8, 8' können mittels der angepassten, ausgeformten Ausnehmungen auf die zusammengefügten und mit den Schneidmesserelementen 2.1 ― 2.4 verbundenen Profilelemente 5a aufgesteckt bzw. aufgeschoben werden. Zusätzlich können die Lagerelemente 8, 8' fest mit den Profilelementen 5a verbunden werden, beispielsweise durch Verschweißen oder Verschrauben. Ebenfalls denkbar ist eine Sicherung durch Splinte.

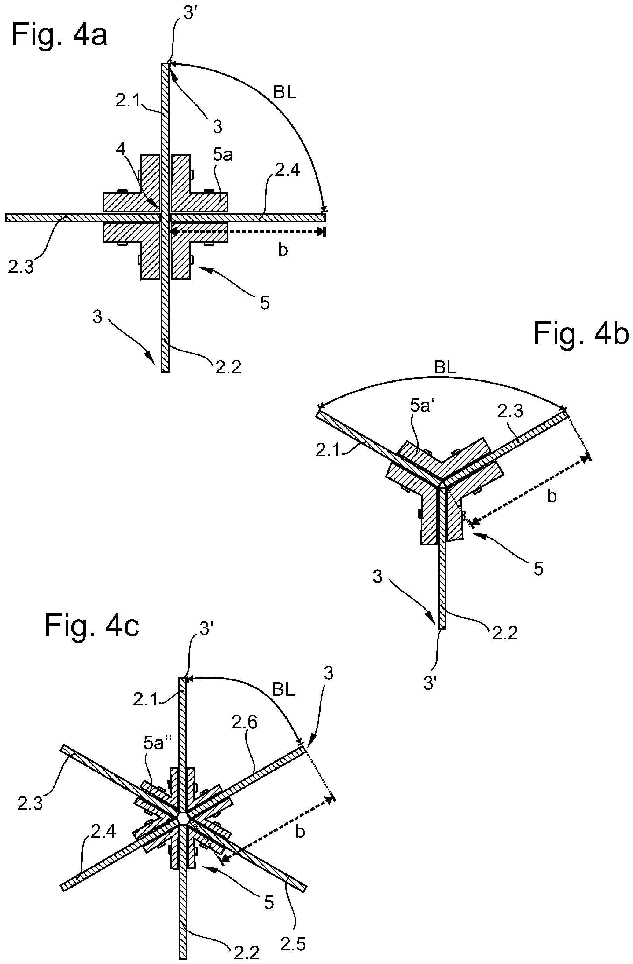

In den Figuren 4a, 4b und 4c sind weitere bevorzugte Ausführungsformen der Schneidvorrichtung 1 dargestellt. Die Ausführungsform gemäß Figur 4a unterscheidet sich von derjenigen der Figuren 1 bis 3 im Wesentlichen nur dadurch, dass das erste und zweite Schneidmesserelement 2.1, 2.2 in Form eines einstückigen Doppelmesserelementes ausgebildet ist, welches über zwei Schneidkantenabschnitte 3 verfügt, die freiendseitig an beiden Enden angeordnet sind. Der Verbindungsabschnitt 4 ist als durchgehender Abschnitt ausgebildet, der mittig zwischen den beiden Schneidkantenabschnitten 3 liegt.

Bei der Ausführungsform gemäß Figur 4b sind drei Schneidmesserelemente 2.1, 2.2, 2.3 vorgesehen, wobei die benachbarten Schneidmesserelemente 2.1, 2.2, 2.3 jeweils einen Winkel von rund 120° einschließen und die jeweiligen Verbindungsabschnitte 4 in eben diesem Winkel aneinander anschließen. Zur tragenden Halterung und Verbindung der drei Schneidmesserelemente 2.1, 2.2, 2.3 sind drei als Winkelprofile ausgebildete Profilelemente 5a' vorgesehen, deren Profilschenkel einen Winkel von etwa 120° einschließen. Bei dieser bevorzugten Ausführungsform liegt die Breite b der Schneidmesserelemente 2.1, 2.2, 2.3 bei etwa 70 mm bis 80 mm, so dass auch hier die Bogenlänge BL wiederum nicht größer als 170 mm, vorzugsweise nicht größer als 150 mm ist und die kurze Schnittlänge eingehalten wird.

Bei der Ausführungsform gemäß Figur 4c sind sechs Schneidmesserelemente 2.1 ― 2.6 vorgesehen, wobei die benachbarten Schneidmesserelemente 2.1 ― 2.6 jeweils einen Winkel von rund 60° einschließen und die jeweiligen Verbindungsabschnitte 4 in eben diesem Winkel aneinander anschließen. Zur tragenden Halterung und Verbindung der sechs Schneidmesserelemente 2.1 ― 2.6 sind sechs als Winkelprofile ausgebildete Profilelemente 5a" vorgesehen, deren Profilschenkel einen Winkel von etwa 60° einschließen. Bei dieser bevorzugten Ausführungsform liegt die Breite b der Schneidmesserelemente 2.1 ― 2.6 bei etwa 140 mm bis 160 mm, so dass auch hier die Bogenlänge BL wiederum nicht größer als 170 mm, vorzugsweise nicht größer als 150 mm ist und die kurze Schnittlänge eingehalten wird.

Zwar nicht in den Figuren dargestellt umfasst eine weitere bevorzugte Ausführungsform nur zwei, sich in Bezug auf die Mittellängsachse MLA gegenüberliegende Schneidmesserelemente 2.1, 2.2, die mittels zwei, jeweils als gerades Schienenprofil ausgebildeten Profilelementen miteinander verbunden sind. In dieser Ausführungsform weisen die Schneidmesserelemente 2.1, 2.2 eine Breite b von rund 55 mm auf, so dass auch hier wiederum die Bogenlänge BL nicht größer als 170 mm ist und die kurze Schnittlänge eingehalten wird.

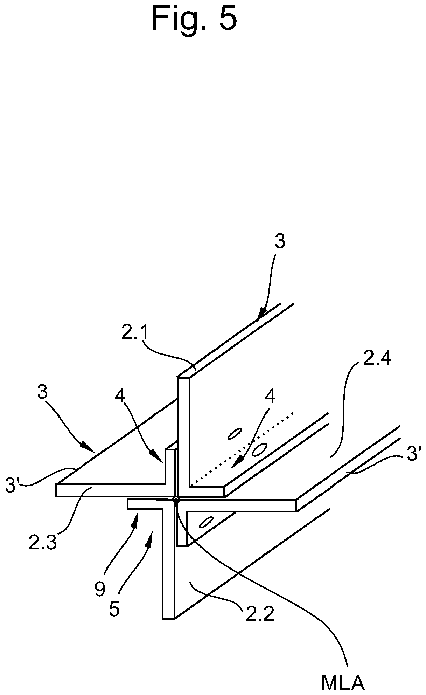

Figur 5 zeigt ausschnittsweise eine perspektivische Ansicht einer alternativen bevorzugten Ausführungsform der Schneidvorrichtung 1. Bei dieser Ausführungsform ist der Verbindungsabschnitt 4 der Schneidmesserelemente 2.1 ― 2.4 in Form eines gewinkelten Flansches ausgebildet und bildet auf diese Weise das Haltemittel 5. Die Schneidmesserelemente 2.1 ― 2.4 sind dabei derart miteinander verbunden, dass jeder Flansch eines Schneidmesserelementes 2.1 ― 2.4 in einem Überlappungsbereich 9 an einem weiteren Schneidmesserelement 2.1 ― 2.4 anliegt und im Überlappungsbereich 9 eine Verschraubung erfolgt. Je nach Anzahl der um die Mittellängsachse MLA herum verteilten Schneidmesserelemente 2.1 ― 2.4 kann der Anstellwinkel des abgewinkelten Flansches variieren. Bei vier Schneidmesserelementen 2.1 ― 2.4 wie im dargestellten Beispiel beträgt der Anstellwinkel beispielsweise rund 90°.

### Bezugszeichenliste

- 1: Schneidvorrichtung
- 1a, 1b: Schneideinheiten
- 2.1: erstes Schneidmesserelement
- 2.2: zweites Schneidmesserelement
- 2.3 - 2.6: weitere Schneidmesserelemente
- 3: Schneidkantenabschnitt
- 3': freie Endkante
- 4: Verbindungsabschnitt
- 5: Haltemittel
- 5a, 5a', 5a": Profilelement
- 6: Lagereinheit
- 7: Anschlusseinheit
- 8, 8': Lagerelement
- 8a: Lagerabschnitt
- 8b: Eingriffsabschnitt
- 9: Überlappungsbereich
- AB: Arbeitsbreite
- AB1, AB2: erste und zweite Teilarbeitsbreite
- b: Breite
- BL: Bogenlänge
- D: Durchmesser
- MLA: Mittellängsachse

## Patentansprüche

1. Schneidvorrichtung (1) zum Zerkleinern von Ernterückständen oder Zwischenfruchtbeständen auf landwirtschaftlichen Nutzflächen, wobei die Schneidvorrichtung (1) um eine Mittellängsachse (MLA) rotierbar ausgebildet ist und dazu wenigstens eine Lagereinheit (6) zur rotierbaren Lagerung aufweist, wobei die Schneidvorrichtung (1) zumindest ein erstes und zweites, jeweils längliches Schneidmesserelement (2.1, 2.2) sowie wenigstens ein Haltemittel (5) zum Haltern der Schneidmesserelemente (2.1, 2.2) umfasst, wobei die jeweils einen Schneidkantenabschnitt (3) und einen dem Schneidkantenabschnitt (3) gegenüberliegenden Verbindungsabschnitt (4) aufweisenden länglichen Schneidmesserelemente (2.1, 2.2) radial orientiert sind und die Schneidkantenabschnitte (3) radial beabstandet zur Mittellängsachse (MLA) angeordnet sind, **dadurch gekennzeichnet, dass** die Schneidmesserelemente (2.1, 2.2) mit Hilfe des Haltemittels (5) direkt miteinander verbunden sind, wobei die Verbindungsabschnitte (4) der Schneidmesserelemente (2.1, 2.2) in einem die Mittellängsachse (MLA) aufnehmenden Zentrumsbereich der Schneidvorrichtung (1) unmittelbar aneinander anschließend angeordnet sind.

2. Schneidvorrichtung (1) nach Anspruch 1, **dadurch gekennzeichnet, dass** ein oder zwei oder drei oder vier weitere Schneidmesserelemente (2.3, 2.4, 2.5, 2.6) vorgesehen sind, wobei alle Schneidmesserelemente (2.3, 2.4, 2.5, 2.6) direkt miteinander verbunden sind, derart, dass die jeweiligen Verbindungsabschnitte (4) der Schneidmesserelemente (2.1 - 2.6) im Zentrumsbereich unmittelbar aneinander anschließen.

3. Schneidvorrichtung (1) nach Anspruch 1 oder 2, **dadurch gekennzeichnet, dass** die Schneidmesserelemente (2.1 - 2.6) um die Mittellängsachse (MLA) herum derart regelmäßig verteilt angeordnet sind, dass die Winkelabstände zwischen benachbarten Schneidmesserelementen (2.1 - 2.6) jeweils gleich groß sind.

4. Schneidvorrichtung (1) nach einem der Ansprüche 1 bis 3, **dadurch gekennzeichnet, dass** eine sich in radialer Richtung erstreckende Breite (b) der Schneidmesserelemente (2.1 - 2.6) in einem Bereich von 50 mm bis 150 mm, bevorzugt in einem Bereich von 75 mm bis 125 mm und besonders bevorzugt bei rund 100 mm liegt, wobei die Breite (b) der Schneidmesserelemente (2.1 - 2.6) näherungsweise einen Radius eines um die Mittellängsachse (MLA) gedachten Kreises definiert und wobei die doppelte Breite (b) der Schneidmesserelemente (2.1 - 2.6) im Wesentlichen einem Durchmesser (D) der Schneidvorrichtung (1) entspricht.

5. Schneidvorrichtung (1) nach Anspruch 4, **dadurch gekennzeichnet, dass** die Breite (b) der Schneidmesserelemente (2.1 - 2.6) so gewählt und auf die Anzahl der um die Mittellängsachse (MLA) herum angeordneten Schneidmesserelemente (2.1 - 2.6) abgestimmt ist, dass freie Endkanten (3') der Schneidkantenabschnitte (3) bei Rotation um die Mittellängsachse (MLA) eine Kreislinie beschreiben und die freien Endkanten (3') zweier benachbarter Schneidmesserelemente (2.1 - 2.6) derart zueinander beabstandet sind, dass ein Kreisbogen zwischen den freien Endkanten (3') der benachbarten Schneidmesserelemente (2.1 - 2.6) eine Bogenlänge (BL) von höchstens 270 mm, vorzugsweise von höchstens 200 mm und besonders bevorzugt von höchstens 170 mm aufweist.

6. Schneidvorrichtung (1) nach einem der Ansprüche 1 bis 5, **dadurch gekennzeichnet, dass** im Falle einer geradzahligen Anzahl von Schneidmesserelementen (2.1, 2.2) jeweils zwei Schneidmesserelemente (2.1, 2.2) in Bezug auf die Mittellängsachse (MLA) gegenüberliegend angeordnet sind und ein gegenüberliegendes Paar von Schneidmesserelementen (2.1, 2.2) bilden, wobei die Verbindungsabschnitte (4) der jeweiligen Paare fluchtend aneinander anschließen und jedes Paar einen jeweiligen Winkel von rund 180° einschließt.

7. Schneidvorrichtung (1) nach Anspruch 6, **dadurch gekennzeichnet, dass** ein Paar an gegenüberliegenden Schneidmesserelementen (2.1, 2.2) in Form eines einstückigen Doppelmesserelementes mit zwei freiendseitigen Schneidkantenabschnitten (3) ausgebildet ist, wobei der Verbindungsabschnitt (4) als mittig zwischen den freiendseitigen Schneidkantenabschnitten (3) angeordneter durchgehender Verbindungsabschnitt (4) vorgesehen ist.

8. Schneidvorrichtung (1) nach einem der vorhergehenden Ansprüche, **dadurch gekennzeichnet, dass** die Haltemittel (5) in Form einer Messerhalterung durch zumindest zwei Profilelemente (5a, 5a', 5a") gebildet ist, wobei jedes Profilelement (5a, 5a', 5a") mit zwei benachbart angeordneten Schneidmesserelementen (2.1 - 2.6) in halternder Wirkverbindung steht.

9. Schneidvorrichtung (1) nach Anspruch 8, **dadurch gekennzeichnet, dass** die Profilelemente (5a, 5a', 5a") als Winkelprofile ausgebildet sind.

10. Schneidvorrichtung (1) nach einem der Ansprüche 1 bis 7, **dadurch gekennzeichnet, dass** der Verbindungsabschnitt (4) der Schneidmesserelemente (2.1 - 2.6) in Form eines gewinkelten Flansches ausgebildet ist und die Haltemittel (5) bildet.

11. Schneidvorrichtung (1) nach einem der vorhergehenden Ansprüche, **dadurch gekennzeichnet, dass** die Schneidmesserelemente (2.1 - 2.6) lösbar und auswechselbar verbunden sind.

12. Schneidvorrichtung (1) nach einem der vorhergehenden Ansprüche, **dadurch gekennzeichnet, dass** die Lagereinheit (6) durch zumindest zwei Lagerelemente (8, 8') zum tragenden Haltern der verbundenen Schneidmesserelemente (2.1 - 2.6) gebildet ist, wobei die Lagerelemente zur tragenden, abschnittsweisen Aufnahme der verbundenen Schneidmesserelemente (2.1 - 2.6) ausgebildet sind und die verbundenen Schneidmesserelemente (2.1 - 2.6) zumindest abschnittsweise in den Lagerelementen (8, 8') tragend aufgenommen sind.

13. Schneidvorrichtung (1) nach Anspruch 12, **dadurch gekennzeichnet, dass** die Lagerelemente koaxial zur Mittellängsachse (MLA) orientiert sind und gegenüberliegende Außenseiten der sich über eine Arbeitsbreite (AB) erstreckenden Schneidvorrichtung definieren und/oder dass die Schneidvorrichtung in einem Bodenbearbeitungsgerät einsetzbar ist und mit weiteren Bodenbearbeitungswerkzeugen kombinierbar ist.

14. Schneidvorrichtung (1) nach einem der vorhergehenden Ansprüche, **dadurch gekennzeichnet, dass** die Schneidvorrichtung aus mehreren Schneideinheiten (1a, 1b) zusammengesetzt ist, wobei die Schneideinheiten (1a, 1b) in Richtung der Mittellängsachse (MLA) aneinander anschließen und koaxial zueinander orientiert und mittels einer Anschlusseinheit (7) miteinander verbunden sind, wobei die Schneideinheiten (1a, 1b) relativ zueinander derart ausgerichtet sind, dass die Schneidmesserelemente (2.1, 2.2) direkt aufeinanderfolgender Schneideinheiten (1a, 1b) zueinander versetzt sind oder fluchtend zueinander ausgerichtet sind.

15. Bodenbearbeitungsgerät mit mindestens einer eine Mittellängsachse (MLA) aufweisenden Schneidvorrichtung (1) zum Zerkleinern von Ernterückständen oder Zwischenfruchtbeständen auf landwirtschaftlichen Nutzflächen, wobei die Schneidvorrichtung (1) über wenigstens eine Lagereinheit (6) um die Mittellängsachse (MLA) rotierbar in einem Trägerrahmen des Bodenbearbeitungsgerätes gelagert ist, **dadurch gekennzeichnet, dass** die Schneidvorrichtung (1) zumindest ein erstes und zweites, jeweils längliches Schneidmesserelement (2.1, 2.2) sowie wenigstens ein Haltemittel (5) zum Haltern der Schneidmesserelemente (2.1, 2.2) umfasst, wobei die jeweils einen Schneidkantenabschnitt (3) und einen dem Schneidkantenabschnitt (3) gegenüberliegenden Verbindungsabschnitt (4) aufweisenden länglichen Schneidmesserelemente (2.1, 2.2) radial orientiert sind und die Schneidkantenabschnitte (3) radial beabstandet zur Mittellängsachse (MLA) angeordnet sind, wobei die Schneidmesserelemente (2.1, 2.2) mit Hilfe des Haltemittels (5) direkt miteinander verbunden sind, wobei die Verbindungsabschnitte (4) der Schneidmesserelemente (2.1, 2.2) in einem die Mittellängsachse (MLA) aufnehmenden Zentrumsbereich der Schneidvorrichtung (1) unmittelbar aneinander anschließend angeordnet sind.

## Claims

1. Cutting device (1) for crushing crop residues or catch crops on agricultural land, wherein the cutting device (1) is designed to be rotatable about a central longitudinal axis (MLA) and for this purpose has at least one bearing unit (6) for rotatable mounting, wherein the cutting device (1) comprises at least one first and second respectively elongated cutting knife element (2.1, 2.2) and at least one holding means (5) for holding the cutting knife elements (2.1, 2.2), wherein the elongated cutting knife elements (2.1, 2.2) respectively have a cutting edge section (3) and a connecting section (4) opposite the cutting edge section (3) and are radially oriented, and the cutting edge sections (3) are arranged spaced radially apart from the central longitudinal axis (MLA), **characterized in that** the cutting knife elements (2.1, 2.2) are directly connected to one another by aid of the holding means (5), wherein the connecting sections (4) of the cutting knife elements (2.1, 2.2) are arranged directly connecting to one another in a center region of the cutting device (1) accommodating the central longitudinal axis (MLA).

2. Cutting device (1) according to claim 1, **characterized in that** one or two or three or four further cutting knife elements (2.3, 2.4, 2.5, 2.6) are provided, wherein all cutting knife elements (2.3, 2.4, 2.5, 2.6) are directly connected to one another in such a way that the respective connecting sections (4) of the cutting knife elements (2.1 - 2.6) directly connect to one another in the center region.

3. Cutting device (1) according to claim 1 or 2, **characterized in that** the cutting knife elements (2.1 - 2.6) are arranged regularly distributed around the central longitudinal axis (MLA) in such a way that the angular distances between adjacent cutting knife elements (2.1 - 2.6) are respectively equal.

4. Cutting device (1) according to one of claims 1 to 3, **characterized in that** a width (b) of the cutting knife elements (2.1 - 2.6) extending in the radial direction lies in a range from 50 mm to 150 mm, particularly in a range from 75 mm to 125 mm, and particularly preferably is around 100 mm, wherein the width (b) of the cutting knife elements (2.1 - 2.6) approximately defines a radius of an imaginary circle about the central longitudinal axis (MLA), and wherein the doubled width (b) of the cutting knife elements (2.1 - 2.6) substantially corresponds to a diameter (D) of the cutting device (1).

5. Cutting device (1) according to claim 4, **characterized in that** the width (b) of the cutting knife elements (2.1 - 2.6) is selected and matched to the number of cutting knife elements (2.1 - 2.6) arranged around the central longitudinal axis (MLA), such that the free end edges (3') of the cutting knife sections (3) describe a circle line during rotation around the central longitudinal axis (MLA) and the free end edges (3') of two adjacent cutting knife elements (2.1 - 2.6) are spaced apart from one another in such a way that a circular arc between the free end edges (3') of the adjacent cutting knife elements (2.1 - 2.6) has an arc length (BL) of at most 270 mm, preferably at most 200 mm, and particularly preferably at most 170 mm.

6. Cutting device (1) according to one of claims 1 to 5, **characterized in that**, in the case of an even number of cutting knife elements (2.1, 2.2), in each case two cutting knife elements (2.1, 2.2) are arranged opposite with respect to central longitudinal axis (MLA) and form an oppositely disposed pair of cutting knife elements (2.1, 2.2), wherein the connecting sections (4) of the respective pairs connect flush to one another and each pair forms a respective angle of approximately 180°.

7. Cutting device (1) according to claim 6, **characterized in that** a pair of oppositely disposed cutting knife elements (2.1, 2.2) is designed in the shape of a one-piece double knife element with two cutting edge sections (3) on the free-end sides, wherein the connecting section (4) is provided as a continuous connecting section (4) arranged centrally between the cutting knife sections (3) on the free-end sides.

8. Cutting device (1) according to one of the preceding claims, **characterized in that** the holding means (5) is formed in the shape of a knife holder by at least two profile elements (5a, 5a', 5a"), wherein each profile element (5a, 5a', 5a") is in holding operative connection with two adjacently-arranged cutting knife elements (2.1 - 2.6).

9. Cutting device (1) according to claim 8, **characterized in that** the profile elements (5a, 5a', 5a") are designed as angle profiles.

10. Cutting device (1) according to one of claims 1 to 7, **characterized in that** the connecting section (4) of the cutting knife elements (2.1 - 2.6) is designed in the shape of an angled flange and forms the holding means (5).

11. Cutting device (1) according to one of the preceding claims, **characterized in that** the cutting knife elements (2.1 - 2.6) are connected detachably and interchangeably.

12. Cutting device (1) according to one of the preceding claims, **characterized in that** the bearing unit (6) is formed by at least two bearing elements (8, 8') for supporting holding of the connected cutting knife elements (2.1 - 2.6), wherein the bearing elements are designed for supporting, sectional accommodation of the connected cutting knife elements (2.1 - 2.6), and the cutting knife elements (2.1 - 2.6) are supportively accommodated at least in sections in the bearing elements (8, 8').

13. Cutting device (1) according to claim 12, **characterized in that** the bearing elements are oriented coaxially to the central longitudinal axis (MLA) and define oppositely-disposed outer sides of the cutting device extending across a working width (AB), and/or that the cutting device can be used in a soil cultivation device and can be combined with further soil cultivation tools.

14. Cutting device (1) according to one of the preceding claims, **characterized in that** the cutting device is composed from multiple cutting units (1a, 1b), wherein the cutting units (1a, 1b) connect to one another in the direction of the central longitudinal axis (MLA) and are oriented coaxially to one another and are connected to one another by means of a connection unit (7), wherein the cutting units (1a, 1b) are aligned relative to one another in such a way that the cutting knife elements (2.1, 2.2) of directly consecutive cutting units (1a, 1b) are offset to one another or are aligned flush with one another.

15. Soil cultivation device comprising at least one cutting device (1), having a central longitudinal axis (MLA), for crushing crop residues or catch crops on agricultural land, wherein the cutting device (1) is mounted via at least one bearing unit (6) in a support frame of the soil cultivation device to be rotatable about a central longitudinal axis (MLA), **characterized in that** the cutting device (1) comprises at least one first and second respectively elongated cutting knife element (2.1, 2.2) and at least one holding means (5) for holding the cutting knife elements (2.1, 2.2), wherein the elongated cutting knife elements (2.1, 2.2) respectively have a cutting edge section (3) and a connecting section (4) opposite the cutting edge section (3) and are radially oriented, and the cutting edge sections (3) are arranged spaced radially apart from the central longitudinal axis (MLA), wherein the cutting knife elements (2.1, 2.2) are directly connected to one another by aid of the holding means (5), wherein the connecting sections (4) of the cutting knife elements (2.1, 2.2) are arranged directly connecting to one another in a center region of the cutting device (1) accommodating the central longitudinal axis (MLA).

## Revendications

1. Dispositif de coupe (1), destiné à broyer des résidus de récolte ou des produits de la culture dérobée sur des surfaces agricoles, le dispositif de coupe (1) étant conçu en étant rotatif autour d'un axe médian longitudinal (MLA) et comportant à cet effet au moins un ensemble de paliers (6) pour un logement rotatif, le dispositif de coupe (1) comprenant au moins un premier et un deuxième élément à lame de coupe (2.1, 2.2) respectivement allongé, ainsi qu'au moins un moyen de maintien (5), destiné à maintenir les éléments à lame de coupe (2.1, 2.2), les éléments à lame de coupe (2.1, 2.2) allongés, dont chacun comporte un segment de tranchant (3) et un segment d'assemblage (4) opposé au segment de tranchant (3) étant orientés en direction radiale et les segments de tranchant (3) étant placés avec un écart radial par rapport à l'axe médian longitudinal (MLA), **caractérisé en ce que** les éléments à lame de coupe (2.1, 2.2) sont directement assemblés les uns avec les autres à l'aide du moyen de maintien (5), les segments d'assemblage (4) des éléments à lame de coupe (2.1, 2.2) étant placés en se raccordant immédiatement les uns aux autres dans une zone centrale du dispositif de coupe (1) recevant l'axe médian longitudinal (MLA).

2. Dispositif de coupe (1) selon la revendication 1, **caractérisé en ce qu'**un ou deux ou trois ou quatre éléments à lame de coupe (2.3, 2.4, 2.5, 2.6) supplémentaires sont prévus, tous les éléments à lame de coupe (2.3, 2.4, 2.5, 2.6) étant directement assemblés les uns avec les autres, de telle sorte que les segments d'assemblage (4) respectifs des éléments à lame de coupe (2.1 à 2.6) se raccordent immédiatement les uns sur les autres dans la zone centrale.

3. Dispositif de coupe (1) selon la revendication 1 ou 2, **caractérisé en ce que** les éléments à lame de coupe (2.1 à 2.6) sont placés en distribution régulière autour de l'axe médian longitudinal (MLA), de telle sorte que les écarts angulaires entre des éléments à lame de coupe (2.1 à 2.6) voisins soient chaque fois de dimension identique.

4. Dispositif de coupe (1) selon l'une quelconque des revendications 1 à 3, **caractérisé en ce qu'**une largeur (b) s'étendant en direction radiale des éléments à lame de coupe (2.1 à 2.6) se situe dans un ordre de 50 mm à 150 mm, de préférence dans un ordre de 75 mm à 125 mm et de manière particulièrement préférentielle à environ 100 mm, la largeur (b) des éléments à lame de coupe (2.1 à 2.6) définissant approximativement un rayon d'un cercle virtuel autour de l'axe médian longitudinal (MLA) et le double de la largeur (b) des éléments à lame de coupe (2.1 à 2.6) correspondant sensiblement à un diamètre (D) du dispositif de coupe (1).

5. Dispositif de coupe (1) selon la revendication 4, **caractérisé en ce que** la largeur s'étendant dans la direction radiale (b) des éléments à lame de coupe (2.1 à 2.6) est sélectionnée et adaptée au nombre des éléments à lame de coupe (2.1 à 2.6) placés autour de l'axe médian longitudinal (MLA) de telle sorte que, lors d'une rotation autour de l'axe médian longitudinal (MLA), des arêtes d'extrémité (3') libres des segments de tranchant (3) décrivent une ligne circulaire et les arêtes d'extrémité (3') libres de deux éléments à lame de coupe (2.1 à 2.6) voisins sont écartées l'une de l'autre de telle sorte qu'un arc de cercle entre les arêtes d'extrémité (3') libres des éléments à lame de coupe (2.1 à 2.6) voisins présente une longueur d'arc (BL) d'un maximum de 270 mm, de préférence d'un maximum de 200 mm et de manière particulièrement préférentielle, d'un maximum de 170 mm.

6. Dispositif de coupe (1) selon l'une quelconque des revendications 1 à 5, **caractérisé en ce que** dans le cas d'un nombre pair d'éléments à lame de coupe (2.1, 2.2), chaque fois deux éléments à lame de coupe (2.1, 2.2) sont placés à l'opposée par rapport à l'axe médian longitudinal (MLA) et forment une paire opposée d'éléments à lame de coupe (2.1, 2.2), les segments d'assemblage (4) des paires respectives se raccordant en alignement les uns sur les autres et chaque paire incluant un angle respectif d'environ 180°.

7. Dispositif de coupe (1) selon la revendication 6, **caractérisé en ce qu'**une paire d'éléments à lame de coupe (2.1, 2.2) opposés est conçue sous la forme d'un élément à double lame d'un seul tenant, doté de deux segments de tranchants (3) sur les extrémités libres, le segment d'assemblage (4) étant prévu en tant que segment d'assemblage (4) continu, prévu au centre entre les segments de tranchant (3) sur les extrémités libres.

8. Dispositif de coupe (1) selon l'une quelconque des revendications précédentes, **caractérisé en ce que** le moyen de maintien (5) est conçu sous la forme d'un porte-lame par au moins deux éléments profilés (5a, 5a', 5a"), chaque élément profilé (5a, 5a', 5a") étant en liaison active de maintien avec deux éléments à lame de coupe (2.1 à 2.6) placés au voisinage l'un de l'autre.

9. Dispositif de coupe (1) selon la revendication 8, **caractérisé en ce que** les éléments profilés (5a, 5a', 5a") sont conçus sous la forme de cornières.

10. Dispositif de coupe (1) selon l'une quelconque des revendications 1 à 7, **caractérisé en ce que** le segment d'assemblage (4) des éléments à lame de coupe (2.1 à 2.6) est conçu sous la forme d'une bride coudée et forme les moyens de maintien (5).

11. Dispositif de coupe (1) selon l'une quelconque des revendications précédentes, **caractérisé en ce que** les éléments à lame de coupe (2.1 à 2.6) sont assemblés de manière amovible et interchangeable.

12. Dispositif de coupe (1) selon l'une quelconque des revendications précédentes, **caractérisé en ce que** l'ensemble de paliers (6) est formé par au moins deux éléments de logement (8, 8') destinés au maintien porteur des éléments à lame de coupe (2.1 à 2.6) assemblés, les éléments de logement étant conçus pour recevoir par endroits en les portant les éléments à lame de coupe (2.1 à 2.6) assemblés et **en ce que** les éléments à lame de coupe (2.1 à 2.6) assemblés sont reçus au moins par endroits en étant portés dans les éléments de logement (8, 8').

13. Dispositif de coupe (1) selon la revendication 12, **caractérisé en ce que** les éléments de logement sont orientés de manière coaxiale par rapport à l'axe médian longitudinal (MLA) et définissent des faces extérieures opposées du dispositif de coupe s'étendant sur une largeur de travail (AB) et/ou **en ce que** le dispositif de coupe est insérable dans un engin de travail du sol et peut se combiner avec d'autres outils de travail du sol.

14. Dispositif de coupe (1) selon l'une quelconque des revendications précédentes, **caractérisé en ce que** le dispositif de coupe se compose de plusieurs unités de coupe (1a, 1b), les unités de coupe (1a, 1b) se raccordant les unes sur les autres dans la direction de l'axe médian longitudinal (MLA) et étant orientés de manière coaxiale les uns par rapport aux autres et étant assemblés ensemble au moyen d'une unité de raccordement (7), les unités de coupe (1a, 1b) étant alignées les unes par rapport aux autres de telle sorte que les éléments à lame de coupe (2.1, 2.2) d'unités de coupe (1a, 1b) directement successives soient décalés les uns par rapport aux autres ou soient en alignement mutuel.

15. Outil de travail du sol, pourvu d'au moins un dispositif de coupe (1) comportant un axe médian longitudinal (MLA), destiné à broyer des résidus de récolte ou des produits de la culture dérobée sur des surfaces agricoles, le dispositif de coupe (1) étant logé en étant rotatif autour de l'axe médian longitudinal (MLA) par l'intermédiaire d'au moins un ensemble de paliers (6) dans un cadre porteur de l'outil de travail du sol, **caractérisé en ce que** le dispositif de coupe (1) comprend au moins un premier et un deuxième élément à lame de coupe (2.1, 2.2) allongé, ainsi qu'au moins un moyen de maintien (5), destiné à maintenir les éléments à lame de coupe (2.1, 2.2), les éléments à lame de coupe (2.1, 2.2) allongés, dont chacun comporte un segment de tranchant (3) et un segment d'assemblage (4) opposé au segment de tranchant (3) étant orientés en direction radiale et les segments de tranchant (3) étant placés avec un écart radial par rapport à l'axe médian longitudinal (MLA), les éléments à lame de coupe (2.1, 2.2) étant directement assemblés les uns avec les autres à l'aide du moyen de maintien (5), les segments d'assemblage (4) des éléments à lame de coupe (2.1, 2.2) étant placés en se raccordant immédiatement les uns aux autres dans une zone centrale du dispositif de coupe (1) recevant l'axe médian longitudinal (MLA).
